# EUROPEAN PATENT SPECIFICATION

(11) **EP 0 411 266 B1**
(45) Date of publication and mention of the grant of the patent: **02.02.1994**
(21) Application number: 90110189.9
(22) Date of filing: 29.05.1990
(51) Int. Cl.: F23G 5/20, F23M 5/08

(54) **A method and device for combustion at high temperatures**
Verfahren und Vorrichtung für eine Verbrennung bei hohen Temperaturen
Procédé et dispositif de combustion à haute température

(30) Priority: 09.06.1989 IT 2083889
(43) Date of publication of application: 06.02.1991
(73) Proprietor: Gaia, Mario, I-20060 Cassina de Pecchi, Milano (IT)
(72) Inventor: Gaia, Mario, I-20060 Cassina de Pecchi, Milano (IT)
(74) Representative: Marietti, Giuseppe

(56) References cited:
- AT-B- 113 398
- AT-B- 265 495
- DE-B- 1 005 674
- DE-B- 1 024 191
- DE-C- 452 782
- US-A- 3 357 383

## Description

The invention concerns a method and a device to perform the combustion and ashing of substances at high temperatures, mainly substances containing toxic products. As known the elimination of toxic compounds, particularly organic ones, is often carried out by demolition and oxidation of the molecules of said toxic compounds in ashing furnaces at high temperatures. For a complete elimination of some particularly stable compounds, such as chloro-substituted hydrocarbons and chlorofluorohydrocarbons, in order to avoid too long stay times, it is preferred to operate at very high temperatures (900-1800 degrees C).

Patent specification US-A-3357383 discloses a furnace for burning a pulverized fuel wherein a film of liquid slag formed on the walls is likely to retain the coarse particles of fuel adhering to said film. The internal walls of the furnace are lined with a permanent layer of refractory coating.

At very high temperatures, however, many problems arise, among which the major ones are:
- corrosive action of the combustion products on the refractories of the walls, in particular in the flame impact area;
- melting of the ashes resulting from the load of inorganic substances present in the compounds to be eliminated;
- corrosive and erosive action of melted ashes on the refractories of the walls and the bottom they are in contact with.

DE-B-1024191 shows a fixed furnace wherein a layer of solid ash is obtained by cooling the combustion products.

A finely pulverized fuel is supplied through a tangential admittance to form a centrifugal circulation of the burnt gases in the furnace, on the internal walls of which a cooling pipe system is disposed.

In furnaces of said type it is very difficult to form and maintain an effective layer of solid ash on the very large surface of the cooling pipes because it is not possible to control all the factors which affect the formation of the refractory layer even when the furnace operates under normal conditions.

This invention concerns a method and device, of combustion specially an ashing furnace at very high temperatures, wherein the abovesaid problems are reduced or solved.

This is essentially achieved by a method to perform combustion at high temperatures (> 900 degrees C) within a combustion chamber using ash obtained from combustion, at the melted, semi-melted or dust-like state as a protective refractory layer on the internal walls of the combustion chamber, characterized in that said combustion chamber rotates at speed such that the centrifugal force forms and maintains a continuous layer of said ash on the internal walls of the combustion chamber.

The use of the melted ash itself as refractory on the walls of the combustion chamber eliminates any problem of corrosion simply because the corrodible substance is substituted by the substance which is the source of corrosion and has proved to have sufficient refractory properties.

To perform the abovementioned method, the invention provides a device for the combustion of products, specially harmful toxic ones, at temperatures exceeding 900 degrees C, comprising a combustion chamber defined by a rotary container or crucible; means to rotate the container about its own axis at a given speed; a crown or shutter, fixed in correspondence to one of the axial openings of the container and bearing at least the systems for the introduction of fuel and air and/or oxygen for combustion; and means for discharging the products of combustion and the ashes, characterized in that the shape, the radial dimension, the position of the axis and the rotation speed of the container are such as to create a centrifugal force whose value is at least sufficient to maintain on the whole internal wall a continuous layer of ash at its melted, semi-melted or dust-like state.

Said device, which may be a furnace with horizontal or vertical axis or even the combustion chamber for a gas turbine, is started substantially according to the following steps: controlling the rotation of the crucible at a preset speed; introducing into the crucible a filling of glass powder, silica or ash from previous processes; waiting for a uniform distribution of dust on the internal walls of the crucible due to the centrifugal force; heating and simultaneously actuating cooling on the outside; and recording the speed of rotation possibly adding other powdered material until a continuous layer on the internal walls of the crucible is formed and maintained.

What stated above will be better understood from the following description of two preferred embodiments, illustrated in the accompanying drawings, where:
Figure 1 is a schematic section of an ashing furnace with rotary crucible, according to the invention, of the type with vertical axis.
Figure 2 is a schematic section of an ashing furnace with rotary crucible, according to the invention, of the type with horizontal axis.

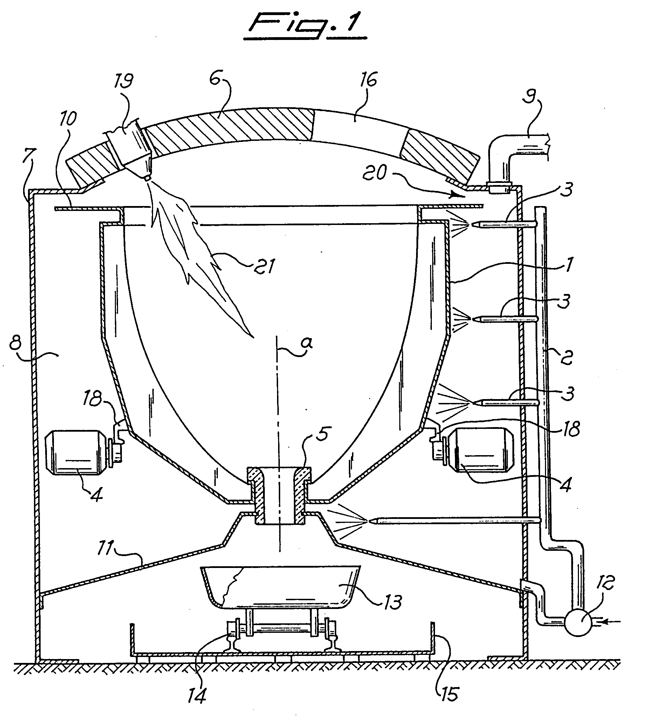

With reference to figure 1, the furnace consists of a container 1 for example in the form of a revolution solid, made of a material having good mechanical resistance (i.e.: welded carbon steel plate possibly coated with thin-layer refractory) and is cooled from the outside by suitable means such as water jets coming from one or more tubes 2 provided with several nozzles 3. Said container will be hereinafter indicated by the term "rotary crucible". The rotary crucible is mounted on suitable wheels or rolling bearings to be put and maintained in rotation at the desired speed about a vertical axis a. In the figure, for exemplifying purposes, the crucible is supported by three motor wheels 4 holding a circular rail 18 integral to the rotary crucible, the crucible is provided with a central discharge duct 5, preferably made of refractory with high thermal mechanical and chemical resistance.

On the crucible top, there is provided a fixed crown 6 having two or more holes for feeding systems of the wastes to be ashed, of the supporter of combustion, of possible additions of inoculants, as well as for discharching combustion products, for inspection, for sampling operations, etc., and for an auxiliary and/or starting burner. In the drawing only the main burner 19 and the discharge opening 16 for burnt gases are illustrated.

The fixed crown can be made of double-wall metal with water cooling, according to the technique used in electric furnaces for metallurgy, or of refractory provided with adequate thermal and mechanical resistance.

On the outside of the rotary crucible and in a way as to support the crown 6, there is provided an external shroud 7, for example made of galvanized sheet iron, possibly thermally insulated by means of suitable material. The external shroud 7 serves to separate from the ambient the volume 8 outside of the crucible 1 wherein the nozzles 3 operate, in a way that water vapor generated by the cooling action of the water jets on the rotary crucible is not dispersed in the atmosphere and in a way that pressure around the rotary crucible can be kept at the desired level. Steam may be partly exhausted through a duct 9 or can flow, depending on the pressure levels, into the rotary crucible through an annular space 20 existing between the fixed portion and the rotary portion 10, as well as possibly through the discharge duct 5.

The internal volume of the shroud can be divided by a septum 11 serving to collect the exceeding water coming from the jets 3 (the septum shape and position are given for exemplifying purposes only). The collected water, after proper restoration and treatment (for example, filtration) to avoid the formation of deposits, is sent again to the pumps 12. The shroud is equipped with sealing doors for the removal of the melted ash collecting container 13 and is designed in a way as to allow the rotary crucible removal for maintenance purposes. The shroud must be provided with proper easily yielding sections as to allow large steam volumes to be exhausted, for example in the catastrophic event of the rotary crucible collapse and subsequent interaction between cooling water and melted ash.

Below the discharge opening 5 there is provided a system to collect melted ash, consisting of a container 13 (of the disposable type or in the form of re-usable ingot mold or other), possibly mounted on a trailer 14 for its easier removal from the furnace. Below the container a dripping-pan 15 may be positioned sized as to be able to receive the largest amount of melted ash which may possibly escape from the hole 5 in case of the equipment malfunctioning. Preferably a few auxiliary jets serve to cool the container 13, in order to avoid dangers during the container removal and in particular to increase the steam flowrate in case of use for energetic purposes.

In case of liquid products or mainly liquid products to be ashed, the feeding takes place through a burner 19, for example of the multi-tubular type, allowing a regular and well directed flame beam 21 to form, which is oriented in a way as to optimise the burnt quantity of combustion supporter or waste. Air optionally enriched with oxygen or even pure oxygen can be used as combustion supporter.

Preferably the fluid coming from the burner and therefore the combustion products will be provided with a speed having a wide enough tangential component with respect to the axis of the rotary crucible as to facilitate the separation of the particulate present in the flame and its deposition on the melted ash bath.

Possible additions (such as water or steam intended to lower the operating temperatures, inoculants to modify the ash composition, further combustion supporter to maintain a proper O² percentage in the chamber) can take place through the burner itself or through other openings (not shown) in the crown. Furthermore, should the adopted burner require it, an auxiliary burner (a fossil fuel one) may be installed in the crown for starting the equipment and maintaining the set temperature.

The burnt gas coming out through the exhaust port 16 will be preferably conveyed to a post-combustion chamber for completion of oxidation and subsequently to a possible energetic use and treatment before being discharged to the atmosphere.

At first starting the crucible 1 is empty and it is therefore necessary to make it rotate by means of motors 4 and then to introduce through the means provided in the fixed crown 6 (not shown) a suitable filling, such as glass powder, silica or ash resulting from previous processes.

When the filling is correctly distributed on the surface, heat is introduced through the auxiliary burner or directly through the main burner until the crucible filling is brought to melt, while the water jets are operated to keep the container 1 cold.

At this point the melted ash takes approximately the shape of a rotation paraboloid and care is taken, by possible additions and variations in the rotation speed, that portions of the container do not remain uncovered.

Once steady conditions achieved normal operation can start, with the introduction of the waste to be ashed in replacement of all or part of the fossil fuel.

Ashes resulting from combustion are added to the crucible filling and, after some time, they are discharged, through the port 5, into the container 13, by natural overfall or by way of a slight decrease in the set speed of rotation.

During operation, the external wall of the container 1 is kept at moderate temperature (for example less than 100 degrees C) by the water jets, so the internal face of the container is covered by a layer of solid ash protecting the container from the thermal, chemical and erosive action of the melted mass. The flame beam may therefore attain very high temperatures, in particular by combustion in pure oxygen, without the crucible wall being damaged.

The tolerable average temperatures for the melted mass and combustion gases mainly depend on the crown's characteristics.

The steam in the volume 8 must be kept at slightly higher pressure than the one existing within the crucible, in a way that steam flow towards the crucible takes place and burnt gases do not escape. This situation naturally occurs when the shroud is pneumatically sealed and no steam is drawn from the duct 9 or it is drawn without the use of pumping means. The steam flow entering through the slot 20 laps the crown and can therefore exert a protective action thereon against the most aggressive products of combustion and those at high temperatures.

The addition of a certain amount of steam to burnt gases can be advantageous from the viewpoint of subsequent energetic use (see previous european patent application N. 90103109.6 by the same Applicant). A furnace of this type, in the embodiment with crown provided with water jacket, has no pieces which may be damaged by rapid temperature variations, therefore quick startings and quick operative variations are possible.

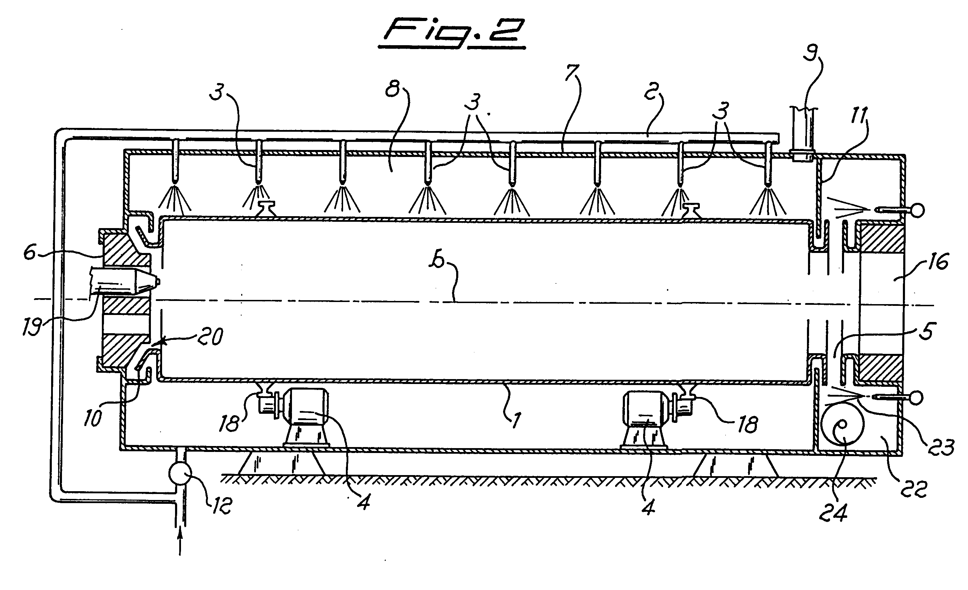

Figure 2 shows an embodiment with horizontal axis, wherein equal or corresponding pieces are indicated by the same references as those in the embodiment of figure 1. In the illustrated case, the container 1 has a cylindrical shape with horizontal axis b and is supported by four motor wheels 4 which hold two circular rails 18. At one end of the rotary crucible there is provided a fixed shutter 6 bearing the systems for the introduction of wastes, combustion supporter, possible additions, for inspection and sampling operations, as well as optionally the auxiliary and/or starting burner. At the opposite end, an opening 16-5 is provided for burnt gases exhaust and for the elimination of exceeding melted ash.

The external shroud 7 has here a different shape, but it has essentially the same function as the shroud 7 examined in figure 1. The septum 11 is vertical and defining a space 22 wherein exceeding ashes can fall, which are cooled by means of water jets 23 before being conveyed towards the outside, for example by a scroll 24.

Alternatively, instead of using a continuous system of ashes discharge, the furnace may be periodically stopped and cooled, the crucible opened at one end (for example at the opposite end to the shutter 6, which then will only have an exhaust opening for burnt gases) and all ashes discharged.

For the rest, the starting and operation of this furnace are the same as described for the furnace of figure 1, therefore a detailed description is not repeated.

It must be noted that, though the exemplified embodiments referred to ashing furnaces, the principles of this invention can be applied also to different combustion devices, for example to combustion chambers for gas turbines, in particular for combustion of dust-like solid substances, such as for instance saw dust.

## Claims

1. A method to perform combustion at high temperatures (900 degrees C) within a combustion chamber using ash obtained from combustion, at the melted, semi-melted or dust-like state as a protective refractory layer on the internal walls of the combustion chamber, characterized in that said combustion chamber rotates at speed such that the centrifugal force forms and maintains a continuous layer of said ash on the internal walls of the combustion chamber.

2. A method according to claim 1, characterized in that the external walls of said combustion chamber are cooled.

3. A method according to claim 1, characterized in that the rotation speed of said combustion chamber is controlled.

4. A device for the combustion of products, specially harmful toxic ones, at temperatures exceeding 900 degrees C, comprising a combustion chamber defined by a rotary container or crucible; means to rotate the container about its own axis at a given speed; a crown or shutter, fixed in correspondence to one of the axial openings of the container and bearing at least the systems for the introduction of fuel and air and/or oxygen for combustion; and means for discharging the products of combustion and the ashes, characterized in that the shape, the radial dimension, the position of the axis and the rotation speed of the container are such as to create a centrifugal force whose value is at least sufficient to maintain on the whole internal wall a continuous layer of ash at its melted, semi-melted or dust-like state.

5. A device according to claim 4, characterized in that it comprises means to cool said rotary container on its external surface.

6. A device according to claim 5, characterized in that said means to cool the rotary container comprise water jets directed towards the external surface of the crucible wall.

7. A device according to claim 4, characterized in that it further comprises a shroud essentially closed towards the outside and defining a closed space in which steam generated by the cooling action of the water jets develops.

8. A device according to claim 7, characterized in that said shroud has at least one passage for discharging at least part of the steam under pressure within said shroud toward said crucible.

9. A device according to one of the claims 4 to 8, characterized in that, at its end opposite to the crown or shutter, a discharge opening for exceeding melted, semi-melted or dust-like ash is provided.

10. A device according to claim 9, characterized in that a unit for the elimination of excess ash is placed at the outlet of said opening.

11. A device according to claim 9 or 10, characterized in that means to control the crucible rotation speed are provided to cause the excess ash to be discharged.

12. A device according to one of the claims 4 to 10, characterized in that its axis of rotation is vertical; the crucible has a cup shape, upperly closed by a crown having at least one opening for the exhaust of burnt gases; and said discharge opening for ashes is placed on the bottom and protected by an overflow projection defining, with the other parameters, the thickness of melted, semi-melted or dust-like ash layer.

13. A device according to one of the claims 4 to 10, characterized in that its axis of rotation is horizontal and in that it has a tubular shape closed at one end by a shutter and open at the opposite end for the discharge of fumes and possibly of ashes.

14. A device according to one of the claims 4 to 13, characterized in that it consists of a furnace for ashing wastes, specially containing toxic compounds.

15. A device according to one of the claims 4 to 7 and 9 to 13, characterized in that it consists of a combustion chamber for a gas turbine, in particular for combustion of solid dust-like substances.

16. A process for starting and operating a device according to one of claims 4 to 15, characterized in that it comprises the steps of: controlling the rotation of the crucible at a preset speed; introducing into the crucible a filling of glass powder, silica or ash from previous processes; waiting for a uniform distribution of dust on the internal walls of the crucible due to the centrifugal force; heating and simultaneously actuating cooling on the outside; and recording the speed of rotation possibly adding other powdered material until a continuous layer on the internal walls of the crucible is formed and maintained.

## Patentansprüche

1. Verfahren, um eine Verbrennung bei hohen Temperaturen (900 °C) in einer Brennkammer durchzuführen, unter Verwendung von aus der Verbrennung erhaltener Asche in geschmolzenen, halbgeschmolzenen oder staubförmigen Zustand als eine schützende Feuerfestschicht an den Innenwandungen der Brennkammer,
dadurch gekennzeichnet,
daß die Brennkammer sich mit einer solchen Geschwindigkeit dreht, daß die Fliehkraft eine durchgehende Schicht der Asche an den Innenwandungen der Brennkammer bildet und aufrechterhält.

2. Verfahren nach Anspruch 1,
dadurch gekennzeichnet,
daß die Außenwandungen der Brennkammer gekühlt werden.

3. Verfahren nach Anspruch 1,
dadurch gekennzeichnet,
daß die Drehgeschwindigkeit der Brennkammer gesteuert wird.

4. Vorrichtung zum Verbrennen von Produkten, insbesondere von schädlichen toxischen Produkten, bei Temperaturen über 900 °C, wobei die Vorrichtung folgendes aufweist:
eine Brennkammer, die von einem drehbaren Behälter oder Tiegel gebildet ist;
eine Einrichtung, um den Behälter um seine eigene Achse mit einer gegebenen Geschwindigkeit zu drehen;
einen Verschluß oder eine Haube, die in Übereinstimmung mit einer der axialen Öffnungen des Behälters befestigt ist und zumindest die Systeme für die Einleitung von Brennstoff und Luft und/oder Sauerstoff für die Verbrennung trägt; und eine Einrichtung zum Abführen der Verbrennungsprodukte und der Aschen,
dadurch gekennzeichnet,
daß die Gestalt, die radiale Dimension, die Position der Achse und die Drehgeschwindigkeit des Behälters derart vorgesehen sind, daß eine Fliehkraft erzeugt wird, deren Wert zumindest ausreicht, um an der gesamten Innenwand eine durchgehende Ascheschicht in ihrem geschmolzenen, halbgeschmolzenen oder staubförmigen Zustand aufrechtzuerhalten.

5. Vorrichtung nach Anspruch 4,
dadurch gekennzeichnet,
daß sie eine Einrichtung aufweist, um den drehbaren Behälter an seiner Außenfläche zu kühlen.

6. Vorrichtung nach Anspruch 5,
dadurch gekennzeichnet,
daß die Einrichtung zum Kühlen des drehbaren Behälters Wasserstrahlen aufweist, die auf die Außenfläche der Tiegelwand gerichtet sind.

7. Vorrichtung nach Anspruch 4,
dadurch gekennzeichnet,
daß sie ferner einen Mantel aufweist, der zur Außenseite im wesentlichen geschlossen ist und einen geschlossenen Raum bildet, in dem sich Dampf, der durch die Kühlwirkung der Wasserstrahlen erzeugt wird, entwickelt.

8. Vorrichtung nach Anspruch 7,
dadurch gekennzeichnet,
daß der Mantel mindestens einen Durchgang hat, um zumindest einen Teil des unter Druck stehenden Dampfs im Inneren des Mantels in Richtung zum Tiegel abzuführen.

9. Vorrichtung nach einem der Ansprüche 4 bis 8,
dadurch gekennzeichnet,
daß an ihren dem Verschluß oder der Haube gegenüberliegenden Ende eine Austragöffnung für überschüssige geschmolzene, halbgaschmolzene oder staubförmige Asche vorgesehen ist.

10. Vorrichtung nach Anspruch 9,
dadurch gekennzeichnet,
daß eine Einheit zur Beseitigung von überschüssiger Asche an dem Auslaß der Öffnung angeordnet ist.

11. Vorrichtung nach Anspruch 9 oder 10,
dadurch gekennzeichnet,
daß Einrichtungen vorgesehen sind, um die Drehgeschwindigkeit des Tiegels zu steuern, um die Abführung der überschüssigen Asche zu bewirken.

12. Vorrichtung nach einem der Ansprüche 4 bis 10,
dadurch gekennzeichnet,
daß ihre Drehachse vertikal ist;
daß der Tiegel eine Becherform hat, die an der Oberseite mit einer Haube verschlossen ist, die mindestens eine Öffnung zur Ableitung von verbrannten Gasen hat; und
daß die Austragöffnung für Aschen am Boden angeordnet und durch einen Überlaufvorsprung geschützt ist, der mit den übrigen Parametern die Dicke der geschmolzenen, halbgeschmolzenen oder staubförmigen Ascheschicht vorgibt.

13. Vorrichtung nach einem der Ansprüche 4 bis 10,
dadurch gekennzeichnet,
daß ihre Drehachse horizontal ist und
daß sie eine Rohrform hat, die an einem Ende mit einem Verschluß verschlossen und am entgegengesetzten Ende offen ist; um Abgase und eventuell Asche abzuführen.

14. Vorrichtung nach einem der Ansprüche 4 bis 13,
dadurch gekennzeichnet,
daß sie aus einem Ofen zum Veraschen von Abfällen, insbesondere solchen, die toxische Verbindungen, enthalten, besteht.

15. Vorrichtung nach einem der Ansprüche 4 bis 7 und 9 bis 13,
dadurch gekennzeichnet,
daß sie aus einer Brennkammer für eine Gasturbine, insbesondere zur Verbrennung von festen staubförmigen Substanzen, besteht.

16. Verfahren zum Anfahren und Betreiben einer Vorrichtung nach einem der Ansprüche 4 bis 15,
dadurch gekennzeichnet,
daß es die folgenden Schritte aufweist:
Steuern der Drehung des Tiegels mit einer vorgebenenen Geschwindigkeit;
Einbringen einer Füllung aus Glasmehl, Silicamaterial oder Asche aus vorhergehenden Prozessen in den Tiegel;
warten bis zu einer gleichmäßigen Staubverteilung an den Innenwandungen des Tiegels infolge der Fliehkraft;
Erhitzen und gleichzeitiges Auslösen der Kühlung an der Außenseite; und
Aufzeichnen der Drehgeschwindigkeit unter eventuellem Zusatz von weiterem pulverförmigem Material, bis eine durchgehende Schicht an den Innenwandungen des Tiegels gebildet ist und aufrechterhalten wird.

## Revendications

1. Méthode pour effectuer une combustion à haute temperature (900 °C) à l'interieur d'une chambre de combustion, en utilisant de la cendre obtenue par la combustion, dans son état fondu, demi-fondu ou en poudre, comme couche réfractaire protectrice sur les parois intérieures de la chambre de combustion, caracterisée en ce que ladite chambre de combustion tourne à une vitesse telle que la force centrifuge forme et garde une couche continue de ladite cendre sur les parois intérieures de la chambre de combustion.

2. Méthode sélon la revendication 1, caracterisée par le fait que les parois extérieures de ladite chambre de combustion sont réfoidies.

3. Mèthode sélon la revendication 1, caracterisée en ce que la vitesse de rotation de ladite chambre de combustion est réglée.

4. Dispositif pour la combustion de produits, notamment de produits toxiques dangereux, à des temperatures superieures à 900 °C, ce dispositif comprenant une chambre de combustion définie par un récipient ou creuset; des moyens pour tourner le récipient autour de son axe à une vitesse déterminée; une couronne ou obturateur fixé en correspondance d'une des ouvertures axiales du récipient et soutenant au moins des sytèmes pour l'introduction de carburant et d'air et/ou oxigène pour la combustion; et des moyens pour décharger les produits de la combustion et les cendres. caracterisé en ce que la forme, la dimension en direction radiale, la position de l'axe et la vitesse de rotation du récipient sont telles à créer une force centrifuge dont la valeur est au moins suffisante pour maintenir sour toute la parois interieure du récipient une couche continue de cendre dans son état fondu, demi-fondu ou en poudre.

5. Dispositif selon la revendication 4, caracterisé en ce qu'il comprend des moyens pour refroidir le rècipient tournant, sur sa surface extérieure.

6. Dispositif selon la revendication 5, caracterisé en ce que lesdits moyens pour refroidir le rècipeint tournant comprennent des jets d'eau dirigés contre la surface extérieure des parois du creuset.

7. Dispositif selon la revendication 4, caracterisé en ce qu'il comprend un ecran substantiellement fermé vers l'exterieur et qui définit un espace fermé dans lequel se forme la vapeur generée par l'action de refroidissement des jets d'eau.

8. Dispositif selon la revendication 7, caracterisé en ce que ledit ecran presente au moins un passage pour envoyer vers ledit creuset au moins une partie de la vapeur sous pression presente à l'interieur dudit ecran.

9. Dispositif selon une des revendications 4 à 8, caracterisé en ce que à l'extremité opposée à ladite couronne ou obturateur est prevue une ouverture de décharge pour la cendre fondue, demi-fondue ou en poudre qui est en excés.

10. Dispositif selon la revendication 9, caracterisé en ce que à la sortie de ladite ouverture est prevu un appareillage pour l'élimination de la cendre en excés.

11. Dispositif selon la revendication 9 ou 10, caracterisé en ce que des moyens pour régler la vitesse de rotation du creuset sont prevus au but d'obtenir le décharge de la cendre en excés.

12. Dispositif selon une des revendications 4 à 10, caracterisé en ce que son axe de rotation est vertical; que le creuset a la forme d'une coupe fermée superieurement par une couronne ayant au moins une ouverture pour le décharge des gaz brulés; et que ladite ouverture de décharge pour la cendre est placée sur le fond et protegée per une saillie de surdébit qui définit, avec les autres paramètres, l'épaisseur de la couche de cendre fondue, demi-fondue ou en poudre.

13. Dispositif selon une des revendication 4 à 10, caracterisé en ce que son axe de rotation est horizontal et en ce qu'il a une forme tubulaire fermée à une extremitée par un obturateur et ouverte à l'autre extremitée pour le décharge des fumées et eventuellement de la cendre.

14. Dispositif selon une des revendications 4 à 13, caracterisé en ce qu'il est formé par un four d'incineration d'ordures, en particulier ayant des composés toxiques.

15. Dispositif selon une des revendications 4 à 7 et 9 à 13, caracterisé en ce qu'il est formé par une chambre de combustion d'une turbine à gaz, en particulier pour la combustion de substances solides en poudre.

16. Procedé pour la mise en marche et l'exploitation d'un dispositif selon une des revendication 4 à 15, caracterisé en ce qu'il comprend les stades de: régler la rotation du creuset à une vitesse predeterminée; introduire dans le creuset un remplissage de poudre de verre, silice ou cendre en provenance d'operations précedentes; attendre une disposition uniforme de la poudre sur les parois interieures du creuset à cause de la force centrifuge; et régler la vitesse de rotation avec l'eventuelle adjonction d'autre materiel en poudre jusqu'à obtenir et garder une couche continue sur les parois interieures du creuzet.
